# EUROPEAN PATENT SPECIFICATION

(11) **EP 0 428 847 B1**
(45) Date of publication and mention of the grant of the patent: **02.03.1994**
(21) Application number: 90118129.7
(22) Date of filing: 20.09.1990
(51) Int. Cl.: F16D 25/11, F16H 61/06

(54) **Change-over valve**
Umschaltventil
Vanne de commutation

(30) Priority: 20.11.1989 JP 301617/89
(43) Date of publication of application: 29.05.1991
(73) Proprietor: ZEXEL CORPORATION, Tokyo (JP)
(72) Inventor: Ichihashi, Koji, Higashimatsuyama-shi, Saitama-ken (JP); Tanaka, Kyoji, Higashimatsuyama-shi, Saitama-ken (JP)
(74) Representative: Goddar, Heinz J., Dr.

(56) References cited:
- US-A- 2 836 196
- US-A- 4 646 895

## Description

### DETAILED DESCRIPTION OF THE INVENTION

### (Industrial Applicability)

The present invention relates to a change-over valve for causing a plurality of hydraulic actuators to effect operation without time deviation.

### (Prior Art)

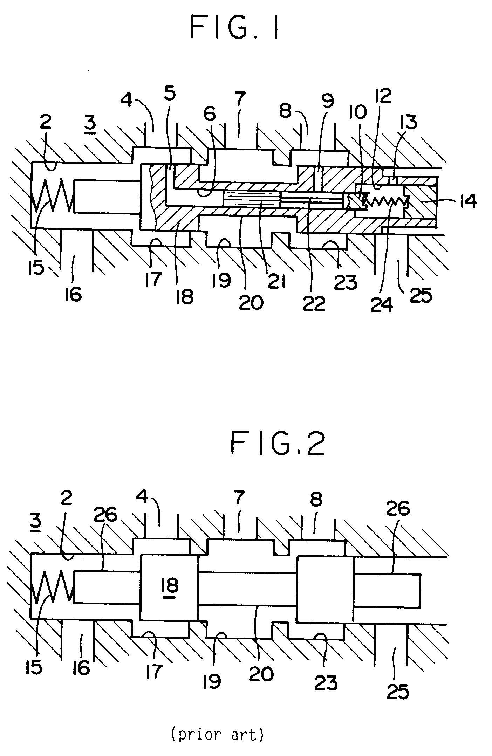

In the case where a member as required is reciprocated or stopped at a suitable position by a reciprocating type hydraulic actuator in which a piston is inserted into a cylinder to define a pair of oil chambers and a rod coupled to the piston is extended externally from the cylinder, a general direction change-over valve, as shown in FIG. 2 or known from document US-A-2 836 196, is used. More specifically, when a spool 18 is moved rightward (to the position shown in Fig. 2) from a neutral position, pressure oil is supplied from a hydraulic pump, not shown, to an input port 19 via a passage 7, and the pressure oil is further supplied to a chamber at one end of an actuator via a central annular groove 20 of a spool 18, an output port 23 and a passage 8 whereby the hydraulic actuator is moved forward. At the same time, oil in a chamber at the other end of the hydraulic actuator is introduced into an output port 17 via a passage 4 and then returned to an oil tank, not shown, via an annular groove or a small-diameter portion 26 on opposite ends of the spool 18 and a drain port 16.

When the spool 18 is returned to the neutral position, a portion between the input port 19 and each of the output ports 17 and 23 is cut off by a pair of lands of the spool 18, and the hydraulic actuator is stopped at that position.

Conversely, when the spool 18 is moved leftward from the neutral position, a flow direction of oil is reversed so that the hydraulic actuator is moved backward.

In the case where a single hydraulic actuator is driven by the change-over valve as described above, the hydraulic actuator is operated in the reverse direction as soon as the spool is switched. However, in the case where a pair of hydraulic actuators moved backward by means of springs are driven by a change-over valve, operation of a pair of members driven by the pair of hydraulic actuators is not simultaneously switched.

A speed change gear or transmission for an agricultural tractor, a construction vehicle and the like is provided with a hydraulic type low-speed shift clutch and a hydraulic type high-speed shift clutch. When pressure oil is supplied to one of these hydraulic actuators, one of clutches is connected. In the speed change gear of this kind, when the change-over valve is switched, for example, in order to disconnect the low-speed shift clutch and connect the high speed shift clutch, the low-speed shift clutch is immediately disconnected but the connecting operation of the high-speed shift clutch is delayed in time till pressure oil is fully supplied to the hydraulic actuator for the high-speed shift clutch, during which period the vehicle speed is lowered or stopped and results in a unsmooth shift-up (becomes shifted up increased in speed very unsmoothly).

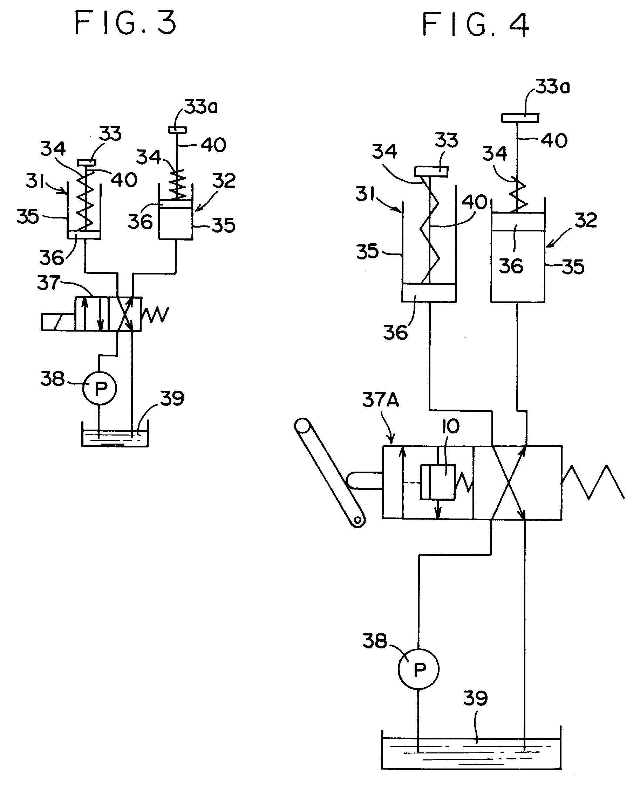

That is, in hydraulic actuators 31 and 32 for connecting and disconnecting high-speed shift clutch 33 and low-speed shift clutch 33a, respectively, in FIG. 3, a piston 36 is inserted into a cylinder 35 to define an oil chamber in one end thereof whereas a spring 34 is disposed on the other end of the cylinder 35 to bias clutches 33 and 33a connected to the piston 36 through a rod 40 in a disconnecting direction.

In the illustrated state where the pressure oil from a hydraulic pump 38 is supplied to an oil chamber of the hydraulic actuator 32 for the low-speed shift clutch 33a via an electromagnetic change-over valve 37 and oil in an oil chamber of the hydraulic actuator 31 of the high-speed shift clutch 33 is returned to an oil tank 39. When the electromagnetic change-over valve 37 is switched, the oil pressure of the hydraulic actuator 32 is released to the oil tank 39 via electromagnetic change-over valve 37 and the low-speed shift clutch 33a is immediately disconnected. However, the high-speed shift clutch 33 is not connected till the pressure oil from the hydraulic pump 38 enters into the oil chamber of the hydralic actuator 31 to produce a stroke as required to the piston 36. Unsmooth operation occurs such that, if running load of vehicle is high, vehicle speed assumes zero (0) during shift operation, and when the high-speed shift clutch 33 is connected, the vehicle quickly starts.

### (Problems to be solved by the Invention)

In view of the aforementioned problems, it is an object of the present invention to provide a change-over valve which can impart smooth operation without time loss or time deviation to members driven by a plurality of hydraulic actuators.

### (Means for solving the problems)

For achieving the aforesaid object, the present invention provides an arrangement wherein a closing valve is disposed on an internal passage of a spool for connecting and disconnecting one of output ports to a drain port adjacent thereto on a valve cylinder and there is provided an actuator for opening said closing valve against a spring force by fluid pressure of the other of said output ports.

### (Function)

Even if the input port is connected to one output port having been so far connected to the drain port as the spool is switched, the other output port remains disconnected from the drain port. When the stroke of the second hydraulic actuator connected to one output port is accomplished, the oil pressure of said output portion increases, and the closing valve housed in the spool is opened against the spring force, and then the output port is communicated with the drain port. At that time, the oil pressure of the first hydraulic actuator connected to the other output port is released. In this way, the member driven by the second hydraulic actuator is assisted and, at the same time, the member driven by the first hydraulic actuator is released.

### (Embodiments of the Invention)

As shown in FIG. 1, a change-over valve according to the present invention comprises a valve housing 3 having a valve cylinder 2, a spool 18 slisdably fitted into the valve cylinder 2, a hydraulic actuator including a piston 21 within the spool 18, the piston 21 being driven by pressure of an output port 17, and a closing valve 10 driven by the hydraulic actuator to open an internal spool passage connecting the other output port 23 with a drain port 25. The valve cylinder 2 is formed in its central portion with an input port 19, in its opposite sides with output ports 17 and 23, and in its oppsite end sides with drain ports 16 and 25. The input port 19 is communicated with a discharge opening of a hydraulic pump, not shown, via a passage 7. The output ports 17 and 23 are each communicated with an oil chamber of each of the hydraulic actuators via passages 4 and 8. The drain ports 16 and 25 are communicated with an oil tank.

In the illustrated embodiment, the spool 18 is switched to a neutral position, a right operating position as shown and a left operating position by an electromagnetic actuator, not shown, coupled to the right end of the spool 18 against a force of a spring 15 which is interposed between the end wall of the valve cyclinder 2 and the left end of the spool 18. Such a structure as described above is substantially similar to that of prior art, shown in FIG. 2.

According to the present invention, the piston 21 is slidably fitted in an axial cylinder 6 provided on the axis of the spool 18 to constitute a hydraulic actuator. The left end of the cylinder 6 is always communicated with the output port 17 by a diametral passage 5. The closing valve 10 connected to the piston 21 by a stem 22 is fitted in the right end of the cylinder 6 by a force of a spring 24 which is interposed between a plug 14 for closing a cylindrical portion 12 having a larger diameter than that of the cylinder 6 and the closing valve 10.

An intermediate portion of the cylinder 6 is always communicated with the output port 23 via a diametral paasage 9. The cylindrical portion 12 is always communicated with the drain port 25 via a diametral passage 13. The passage 9, cylinder 6, cylindrical portion 12 and passage 13 costitute a passage to render communication between the output port 23 and the drain port 25, said passage being normally closed by the aforementioned closing valve 10.

FIG. 4 is a view of a hydraulic circuit in which hydraulic actuators for connecting and disconnecting a hydraulic type low-speed shift clutch and a hydraulic type high-speed shift clutch are controlled by the change-over valve according to the present invention. A change-over valve 37A accoding to the present invention is connected in place of the elctromagnetic chang-over valve 37, shown in FIG. 3.

Operation of the change-over valve according to the present invention will be described hereinafter. At the rightward operating position of the spool 18, shown in FIG. 1, the input port 19 and the output port 23 are communicated by the annular groove 20 the the spool 18. Accordingly, the pressure oil from the hydraulic pump is supplied to the first hydraulic actuator, not shown, via the passage 7, input port 19, output port 23 and passage 8.

When the spool 18 is switched to the leftward operating position from the aforesaid state, the input port 19 and the output port 17 are communicated by the annular groove 20 of the spool 18 so that the pressure oil from the hydraulic pump is supplied to the second hydrulic actuator, not shown, via the passage 7, the input port 19, output port 17 and passage 4.

However, since the output port 23 remains closed by the right-hand land of the spool 18, the first hydraulic actuator connected to the passage 8 is not moved backward. Furthermore, since the oil pressure of the output port 17 is very low till the second hydraulic actuator connected to the passage 4 is accomplished in operation, the piston 21 is not operated and the closing valve 10 remains closed.

When the operation of the second hydraulic actuator connected to the passage 4 is accomplished, the oil pressure of the output port 17 increases, and said oil pressure acts on the piston 21 via the passage 5 and the cylinder 6. Therefore, the piston 21 is moved rightward, and the closing valve 10 is protruded from the cylinder 6 toward the large-diameter cylindrical portion 12 against the force of the spring 24. At that time, the output port 23 is communicated with the drain port 25 via the passage 9, cylinder 6, cylindrical portion 12 and passage 13, and the first hydraulic actuator connected to the passage 8 is moved backward.

About the same time the forward operation of the second hydraulic actuator connected to the passage 4 is accomplished as the spool 18 is switched to the leftward operating position, the backward operation of the first hydraulic actuator connected to the passage 8 is started. Accordingly, if the change-over valve of the present invention is applied to the hydraulic type clutches of the speed change gear, as shown in FIG. 3, disconnection of the low-speed shift clutch and connection of the high-speed shift clutch are simultaneously effected to achieve smooth speed change operation.

The time relationship of the backward operation of the second hdyraulic actuator following the forward operation of the first hydraulic actuator is determined by an initial set load of the spring 24.

It is to be noted that the present invention is applied not only to the hydraulic type clutch but to a hydraulic operating apparatus which should be absolutely eliminated time deviation in operation.

### (Effect of the Invention)

As described above, according to the present invention, a closing valve is disposed on an internal passage of a spool for connecting and disconnecting one of output ports to a drain port adjacent thereto on a valve cylinder and there is provided an actuator for opening said closing valve against a spring force by fluid pressure of the other of said output ports. Therefore, when the spool is switched to one side, the input port is communicated with one output port to immediately move forward one hydraulic actuator. However, the portion between the other output port and the drain port is disconnected by the closing valve till pressure of one output port increases, and when the pressure of one output port increases, that is, when the forward operation of one hydraulic actuator is accomplished, the closing valve is opened so that the other output port is communicated with the drain port.

According to the present invention, at the same time the forward operation of the second hydraulic actuator connected to one output port is accomplished, the backward operation of the first hydraulic actuator connected to the another output port starts. Thus, there is no time deviation in the switching operation between the members driven by a pair of hydraulic actuators, and therefore, if the change-over valve may be used, for example, for a hydraulic type clutches such as a speed change gear it is obtained to achieve a smooth switching (speed change operation) from low-speed to high-speed shift.

The change-over valve according to the present invention can be manufactured omitting a part of machining and merely by addition of machining to internal portion of the spool without changing dimensions of a valve housing and a spool of a conventional change-over valve. Therefore, cost is saved.

### BRIEF DESCRIPTION OF THE DRAWINGS

FIG. 1 is a side sectional view of a change-over valve according to the present invetion; FIG. 2 is a side sectional view ofa conventional chang-over valve; FIG. 3 is a hydraulic circuit view for explaining operation of a hydraulic type clutch of a speed change gear required a change-over valve according to the present invention; and FIG. 4 is a hydraulic circuit view of a hydraulic type clutches of a speed change gear provided with a change-over valve according to the present invention
- 1::
- 2:: valve cylinder
- 3:: valve housing
- 4:: passage
- 5:: passage
- 6:: cylinder
- 7:: passage
- 8:: passage
- 9:: diametral passage
- 10:: closing valve
- 11::
- 12:: cylinderrical portion
- 13:: diametral passage
- 14:: plug
- 15:: spring
- 16:: drain port
- 17:: output port
- 18:: spool
- 19:: input port
- 20:: annular groove
- 21:: piston
- 22:: stem
- 23:: output port
- 24:: spring
- 25:: drain port
- 26:: small diameter portion
- 27::
- 28::
- 29::
- 30::
- 31:: hydraulic actuator
- 32:: hydraulic actuator
- 33:: high-speed shift clutch
- 34:: spring 33a:low----
- 35:: cylinder
- 36:: piston
- 37:: change-over valve 37A:-
- 38:: hydraulic pump
- 39:: oil tank
- 40:: rod

## Claims

1. A change-over valve comprising:
a valve housing (3) having a valve cylinder (2) which is provided with an input port (19) constructed by an annular groove in central portion on said valve cylinder, an input passage (7) communicated with said input port (19), a pair of output ports (17) and (23) constructed by annular grooves beside said input port (19) and a pair of output passages (4) and (8) communicated with said output ports (17) and (23), respectively, and a pair of drain ports (16) and (25) disposed on the opposite ends of said valve cylinder (2); and
a spool (18) slidably housed in said valve cylinder (2) and having an annular groove (20) disposed in the central portion on said spool (18) and a pair of small diameter portions on the opposite ends of said spool (18);
characterized in that
a closing valve (10) is disposed in an internal passage of said spool (18) for connecting and disconnecting one of output ports (23) to a drain port (25) adjacent thereto on a valve cylinder (2) and;
there is provided an actuator for opening said closing valve (10) against a spring force by fluid pressure of the other of said output ports (17).

2. A change-over valve according to claim 1 comprising:
means for driving said spool (18) in axial direction thereof;
and said
internal passage (9, 6, 12, 13) being disposed in said spool (18) to make communication between one of said output ports (23) and said drain port (25) adjacent thereto.

## Patentansprüche

1. Umschaltventil, umfassend: ein Ventilgehäuse (3) mit einem Ventilzylinder (2), der mit einem von einer ringförmigen Nut im mittleren Abschnitt des besagten Ventilzylinders gebildeten Einlaßkanal (19) versehen ist, einen mit dem Einlaßkanal (19) in Verbindung stehenden Einlaßdurchlaß (7), ein Paar durch ringförmige Nuten neben dem Einlaßkanal (19) gebildete Auslaßkanäle (17) und (23), ein Paar mit den Auslaßkanälen (17) und (23) in Verbindung stehende Auslaßdurchlässe (4) und (8) und ein Paar an den gegenüberliegenden Endabschnitten des Ventilzylinders (2) angeordnete Auslaßdurchlässe (16) und (25); und einen Kolben (18), der in dem Ventilzylinder (2) verschieblich aufgenommen ist und eine ringförmige Nut (20) aufweist, die im mittleren Abschnitt des besagten Kolbens (18) angeordnet ist, sowie ein Paar Abschnitte mit kleinem Durchmesser an den gegenüberliegenden Endabschnitten des besagten Kolbens (18);
dadurch gekennzeichnet, daß ein Schließventil (10) in einem inneren Durchlaß des besagten Kolbens (18) zum Verbinden und Trennen eines der Auslaßkanäle (23) mit einem benachbart dazu auf dem Ventilzylinder (2) liegenden Auslaßkanal (25) angeordnet ist; und daß ein Betätigungsglied zum Öffnen des besagten Schließventils (10) gegen eine Federkraft durch den Fluiddruck des anderen der beiden Auslaßkanäle (17) vorhanden ist.

2. Umschaltventil nach Anspruch 1, gekennzeichnet durch Mittel zum Bewegen des besagten Kolbens (18) in seiner axialen Richtung, wobei der innere Durchlaß (9, 6, 12, 13) in dem Kolben (18) angeordnet ist, um eine Verbindung zwischen einem der Auslaßkanäle (23) und dem benachbart dazu liegenden Auslaßkanal (25) herzustellen.

## Revendications

1. Valve inverseuse comprenant :
- un boîtier de valve (3) ayant un cylindre de valve (2) muni d'un orifice d'entrée (19) formé par une gorge annulaire en position centrale sur ledit cylindre de valve, un passage d'entrée (7) communiquant avec ledit orifice d'entrée (19), une paire d'orifices de sortie (17) et (23) formés par des gorges annulaires de part et d'autre dudit orifice d'entrée (19) et une paire de passages de sortie (4) et (8) communiquant avec lesdits orifices de sortie (17) et (23) respectivement, et une paires d'orifices de vidange (16) et (25) disposés aux extrémités opposées dudit cylindre de valve (2), et
- une bobine (18) montée coulissante dans ledit cylindre de valve (2) et muni d'une gorge annulaire (20) disposée dans la partie centrale de ladite bobine (18) et une paire de parties de petit diamètre aux extrémités opposées de ladite bobine (18)
caractérisé par le fait que :
une valve de fermeture (10) est disposée dans un passage interne de ladite bobine (18) pour connecter et déconnecter, un des orifices de sortie (23) à un orifice de vidange (25) adjacent à celui-ci sur un cylindre de valve (2) et
il est prévu un organe de commande pour ouvrir ladite valve de fermeture (10), à l'encontre d'une force élastique, par une pression de fluide de l'autre desdits orifices de sortie (17).

2. Valve inverseuse selon la revendication 1, comprenant des moyens pour entraîner ladite bobine (18) dans la direction axiale de celle-ci; et ledit passage interne (9,6,12,13') étant disposé dans ladite bobine (18) pour faire communiquer un desdits orifices de sortie (23) avec ledit orifice de vidange (25) adjacent à celui-ci.
